# FASCICULE DE BREVET EUROPEEN

(11) **EP 3 810 440 B1**
(45) Date de publication et mention de la délivrance du brevet: **07.09.2022**
(21) Numéro de dépôt: 19740617.6
(22) Date de dépôt: 22.05.2019
(51) Int. Cl.: B60C 11/00, B60C 9/28

(54) **PNEUMATIQUE A ARCHITECTURE SOMMET ET SCULPTURE OPTIMISEE**
LUFTREIFEN MIT OPTIMIERTER SCHEITEL-UND-LAUFFLÄCHENARCHITEKTUR
PNEUMATIC TIRE WITH OPTIMIZED CROWN-AND-TREAD-PATTERN ARCHITECTURE

(30) Priorité: 25.06.2018 FR 1855632
(43) Date de publication de la demande: 28.04.2021
(73) Titulaire: COMPAGNIE GENERALE DES ETABLISSEMENTS MICHELIN, 63000 Clermont-Ferrand (FR)
(72) Inventeur: BRUNEAU, François-Xavier, 63040 CLERMONT-FERRAND Cedex 9 (FR); ALBOUY, Mathieu, 63040 CLERMONT-FERRAND Cedex 9 (FR); FABING, Daniel, 63040 CLERMONT-FERRAND Cedex 9 (FR); FRAYSSE, Patrice, 63040 CLERMONT-FERRAND Cedex 9 (FR); TOURNEUX, Vincent, 63040 CLERMONT-FERRAND Cedex 9 (FR)
(74) Mandataire: Desbordes, Guillaume
(86) Numéro de dépôt international: PCT/FR2019/051165
(87) Numéro de publication internationale: WO 2020/002785

(56) Documents cités:
- WO-A1-2016/096404
- FR-A1- 3 057 810
- FR-A1- 3 057 811
- FR-A1- 3 057 812

## Description

### DOMAINE DE L'INVENTION

La présente invention concerne un pneumatique destiné à être monté sur un véhicule de tourisme, et plus particulièrement le sommet d'un tel pneumatique.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. Le plan circonférentiel médian dit plan équateur divise le pneumatique en deux demi tores sensiblement symétriques, le pneumatique pouvant présenter des dissymétries de bande de roulement, d'architecture, liées à la précision de fabrication ou au dimensionnement.

Dans ce qui suit, les expressions « radialement intérieur à» et « radialement extérieur à» signifient respectivement « plus proche de l'axe de rotation du pneumatique, selon la direction radiale, que » et « plus éloigné de l'axe de rotation du pneumatique, selon la direction radiale, que ». Les expressions « axialement intérieur à» et « axialement extérieur à» signifient respectivement « plus proche du plan équateur, selon la direction axiale, que » et « plus éloigné du plan équateur, selon la direction axiale, que ». Une « distance radiale » est une distance par rapport à l'axe de rotation du pneumatique, et une « distance axiale » est une distance par rapport au plan équateur du pneumatique. Une « épaisseur radiale » est mesurée selon la direction radiale, et une « largeur axiale » est mesurée selon la direction axiale.

Un pneumatique comprend un sommet comprenant une bande roulement destinée à venir en contact avec le sol par l'intermédiaire d'une surface de roulement, deux bourrelets destinés à venir en contact avec une jante et deux flancs reliant le sommet aux bourrelets. En outre, un pneumatique comprend une armature de carcasse comprenant au moins une couche de carcasse, radialement intérieure au sommet et reliant les deux bourrelets.

La bande de roulement d'un pneumatique est délimitée, selon la direction radiale, par deux surfaces circonférentielles dont la plus radialement extérieure est la surface de roulement et dont la plus radialement intérieure est appelée surface de fond de sculpture. La surface de fond de sculpture, ou surface de fond, est définie comme la surface translatée de la surface de roulement radialement vers l'intérieur d'une distance radiale égale à la profondeur de sculpture. Il est courant que cette profondeur soit dégressive sur les portions circonférentielles les plus axialement extérieures, appelées épaules, de la bande de roulement.

De plus, la bande de roulement d'un pneumatique est délimitée, selon la direction axiale, par deux surfaces latérales. La bande de roulement est en outre constituée par un ou plusieurs mélanges ou composés caoutchouteux. Les expressions « mélange caoutchouteux » ou « composé caoutchouteux » désigne une composition de caoutchouc comportant au moins un élastomère et une charge.

Le sommet comprend au moins une armature de sommet radialement intérieure à la bande de roulement. L'armature de sommet comprend au moins une armature de travail comprenant au moins une couche de travail composée d'éléments de renforcement parallèles entre eux formant, avec la direction circonférentielle, un angle compris entre 15° et 50°. L'armature de sommet peut également comprendre une armature de frettage comprenant au moins une couche de frettage composée d'éléments de renforcement formant, avec la direction circonférentielle, un angle compris entre 0° et 10°, l'armature de frettage étant le plus souvent mais pas obligatoirement radialement extérieure aux couches de travail.

Pour toute couche d'éléments de renforcement d'armature de sommet, de travail, ou autre, une surface continue, dite surface radialement extérieure (SRE) de la dite couche, passe par le point le plus radialement extérieur de chaque élément de renforcement, de chaque méridien. Pour toute couche d'éléments de renforcement d'armature de sommet, de travail, ou autre, une surface continue, dite surface radialement intérieure (SRI) de la dite couche, passe par les points le plus radialement intérieur de chaque élément de renforcement, de chaque méridien. Les distances radiales entre une couche d'éléments de renforcement et tout autre point, sont mesurées depuis l'une ou l'autre de ces surfaces et de manière à ne pas intégrer l'épaisseur radiale de la dite couche. Si l'autre point de mesure est radialement extérieur à la couche d'éléments de renforcement, la distance radiale est mesurée depuis la surface radialement extérieure SRE à ce point, et respectivement depuis la surface radialement intérieure SRI à l'autre point de mesure si celui-ci est radialement intérieur à la couche d'éléments de renforcement. Ceci permet de prendre des distances radiales cohérentes d'un méridien à l'autre, sans avoir à tenir compte des variations locales possibles liées aux formes des sections des éléments de renforcement des couches.

Afin d'obtenir des performances en adhérence sur sol mouillé, des découpures sont disposées dans la bande de roulement. Une découpure désigne soit un puits, soit une rainure, soit une incision, soit un sillon circonférentiel et forme un espace débouchant sur la surface de roulement.

Une incision ou une rainure présente, sur la surface de roulement, deux dimensions principales caractéristiques : une largeur W et une longueur Lo, telle que la longueur Lo est au moins égale à 2 fois la largeur W. Une incision ou une rainure est donc délimitée par au moins deux faces latérales principales déterminant sa longueur Lo et reliées par une face de fond, les deux faces latérales principales étant distantes l'une de l'autre d'une distance non nulle, dite largeur W de l'incision ou de la rainure.

La profondeur de la découpure est la distance radiale maximale entre la surface de roulement et le fond de la découpure. La valeur maximale des profondeurs des découpures est nommée profondeur de sculpture D.

Une rainure est dite majeure si sa largeur W est au moins égale à 1 mm et sa profondeur D au moins égale à 4 mm.

Dans ce qui suit, l'expression «à l'aplomb de» signifie, «pour chaque méridien, radialement intérieur dans la limite des coordonnées axiales délimitées par ». Ainsi « les points d'une couche de travail à l'aplomb d'une rainure » désignent pour chaque méridien, l'ensemble des points de la couche de travail radialement intérieurs à la rainure dans la limite des coordonnées axiales délimitées par la rainure.

Dans ce qui suit, l'expression « en surplomb de » signifie, « pour chaque méridien, radialement extérieur dans la limite des coordonnées axiales délimitées par ». Ainsi « la partie de la bande roulement en surplomb d'une ondulation » désignent pour chaque méridien, l'ensemble des points de la bande de roulement radialement extérieurs à l'ondulation dans la limite des coordonnées axiales délimitées par l'ondulation.

### ETAT DE LA TECHNIQUE

Un pneumatique doit répondre à de multiples critères de performance portant sur des phénomènes comme l'usure, l'adhérence sur différents types de sol, la résistance au roulement, le comportement dynamique. Ces critères de performance conduisent parfois à des solutions s'opposant à d'autres critères. Ainsi pour une bonne performance en adhérence sol sec, le composé caoutchouteux de la bande de roulement doit être dissipatif et mou. En revanche pour obtenir un pneumatique performant en comportement, notamment en réponse dynamique sur un effort transversal au véhicule et donc principalement dans l'axe de rotation du pneumatique, le pneumatique doit avoir un niveau de rigidité, notamment sous effort transversal, suffisamment élevé. Pour une dimension donnée, la rigidité du pneumatique dépend de la rigidité des différents éléments du pneumatique que sont la bande de roulement, l'armature de sommet, les flancs et les bourrelets. La rigidification de la bande de roulement est traditionnellement obtenue soit à travers la rigidification des composés caoutchouteux amenant une perte adhérence sol sec, soit à travers la diminution de la profondeur de la sculpture ou de la diminution du niveau d'entaillement de la sculpture amenant une perte d'adhérence sur sol mouillé.

Pour pallier le problème, les fabricants de pneumatiques ont par exemple changé le composé caoutchouteux en le rigidifiant notamment par des fibres, comme mentionné dans les documents FR 3 014 442 et FR 2 984 230.

Ces solutions ne sont pas toujours satisfaisantes. Diminuer la profondeur sculpture limite la performance en usure et en adhérence sur route mouillée. Rigidifier le composé caoutchouteux limite les capacités d'adhérence sur sol mouillé et sol sec, et augmente aussi les émissions sonores du pneumatique en roulage. Réduire le volume de creux de la sculpture réduit les capacités d'adhérence sur sol mouillé et plus particulièrement en cas de forte hauteur d'eau au sol. Il est par ailleurs important de maintenir une certaine épaisseur de composés caoutchouteux entre la face de fond des découpures, rainures ou sillons et les éléments de renforcement de la couche de sommet la plus radialement extérieure pour garantir l'endurance du pneumatique.

Ainsi l'utilisation de certains composés caoutchouteux très mous et très adhérents pour réaliser, toute ou partie de la bande de roulement, n'est pas réalisable sans détériorer les autres performances.

Des pneumatiques comprenant une armature de sommet, radialement intérieure à la bande de roulement, comprenant au moins une couche d'éléments de renforcement, la plus radialement extérieure comprenant au moins une ondulation sont décrits dans FR3057810 et FR3057812.

### RESUME DE L'INVENTION

L'objectif principal de la présente invention est donc d'améliorer une performance en utilisant des composés caoutchouteux de la bande de roulement « mous » ou de faible rigidité, afin de pouvoir utiliser leurs propriétés associées. Ces composés caoutchouteux peuvent être par exemple très hystérétiques afin d'augmenter la performance en adhérence sol sec ou au contraire très peu hystérétiques pour faciliter la mise à plat afin d'améliorer plus encore la résistance au roulement. Pour ne pas pénaliser d'autres performances comme l'usure ou le comportement ces composés caoutchouteux de faible rigidité pourront être disposés sur toute la bande de roulement ou sur une partie limitée. Cet objectif est atteint sans modifier ses performances en usure et en endurance du sommet, tout en respectant les normes nationales en résistance au roulement.

Cet objectif est atteint par un pneumatique de tourisme comprenant :
- une bande de roulement destinée à entrer en contact avec un sol par l'intermédiaire d'une surface de roulement comprenant des rainures, une rainure formant un espace débouchant sur la surface de roulement et étant délimitée par deux faces latérales principales reliées par une face de fond, et ayant une largeur W définie par la distance moyenne entre les deux faces latérales et une profondeur D définie par la distance radiale maximale entre la surface de roulement et la face de fond,
- au moins une rainure, étant une rainure majeure, ayant une largeur W au moins égale à 1 mm et une profondeur D au moins égale à 4 mm,
- le pneumatique comprenant en outre une armature de sommet, radialement intérieure à la bande de roulement, comprenant au moins une couche d'éléments de renforcement, nommée couche de sommet,
- la au moins une couche d'éléments de renforcement s'étendant radialement depuis une surface radialement intérieure (SRI) jusqu'à une surface radialement extérieure (SRE),
- la couche de sommet la plus radialement extérieure comprenant au moins une ondulation,
- la au moins une ondulation de la couche de sommet la plus radialement extérieure étant telle que la portion de la couche de sommet la plus radialement extérieure de l'ondulation est radialement extérieure aux points de ladite couche de sommet la plus radialement extérieure à l'aplomb du centre de la face de fond de la rainure majeure la plus proche de ladite ondulation,
- la au moins une ondulation de la couche de sommet la plus radialement extérieure étant telle que, sur au moins 10% de la surface radialement extérieure (SRE) de ladite couche de sommet, la distance radiale (du) entre la surface radialement extérieure (SRE) de la couche de sommet la plus radialement extérieure et la surface de roulement, est inférieure d'au moins 1.5 mm à la distance radiale (dc) entre la surface radialement extérieure (SRE) de la couche de sommet la plus radialement extérieure et la surface de roulement, distance à l'aplomb du centre de la face de fond de la rainure majeure la plus proche de ladite ondulation,
- la distance radiale minimale (du) entre la surface radialement extérieure (SRE) de la couche de sommet la plus radialement extérieure de l'armature de sommet et la surface de roulement, étant au plus égale à la profondeur D de la rainure majeure la plus proche augmentée de 2 mm et au moins égale à la profondeur D de la rainure majeure la plus proche diminuée de 2 mm.
- la partie de la bande de roulement en surplomb d'au moins une ondulation de la couche de sommet la plus radialement extérieure, comprenant au moins 30% d'un composé caoutchouteux M dont le module de cisaillement dynamique G*, mesuré à 40° C à 10% de déformation crête à crête à 10Hz, est au plus égal à 3,25 MPa.

Une bande de roulement comprend généralement un nombre important de rainures majeures, circonférentielles ou non. Une sculpture de la bande de roulement pourrait comprendre une seule rainure majeure et une pluralité de rainures mineures et permettre à l'invention de fonctionner.

Un point d'une couche d'éléments de renforcement appartient à l'ondulation de cette dite couche de sommet si la distance radiale entre le point considéré et le point de la même couche de sommet à l'aplomb du point le plus radialement intérieur de la surface de fond de la rainure majeure la plus proche, est supérieur à 1 mm. Si il existe plus d'une rainure majeure la plus proche, on fera le test d'appartenance à l'ondulation en prenant en compte la rainure majeure qui maximise la distance radiale considérée. Pour le calcul de la distance radiale, on considérera des points des éléments de renforcement de même nature : deux points de la fibre neutre, deux points les plus radialement extérieurs des éléments de renforcement, deux points les plus radialement intérieurs des éléments de renforcement.

Les propriétés des composés caoutchouteux sont mesurées sur un viscoanalyseur (Metravib VA4000), selon la norme ASTM D 5992-96. On enregistre la réponse d'un échantillon de composition vulcanisée de préférence une éprouvette cylindrique de 4 mm d'épaisseur et de 400 mm² de section, soumis à une sollicitation sinusoïdale en cisaillement simple alterné, à la fréquence de 10Hz, lors d'un balayage en température entre 0° et 100°C, sous une contrainte fixe de 0,7 MPa. Les module de cisaillement dynamique G* sont mesuré à une température donnée, 40° C à 10% de déformation crête à crête à 10Hz également selon la norme ASTM D 5992 - 96. Selon les mêmes procédures un module en cisaillement G* à 90°C à 10 Hz et sous une contrainte de 0.7MPa est mesuré.

Pour améliorer certaines performances, comme par exemple l'adhérence sol sec, il est possible d'utiliser des composés caoutchouteux connus de l'homme du métier pour des usages particulier comme la compétition automobile mais ces composés caoutchouteux ne sont pas absolument pas adaptés à des véhicules de tourisme même à tendance sportive. En effet les véhicules de tourisme doivent respecter certaines performances comme les valeurs de résistance au roulement maximales édictées par les normes environnementales et des performances minimales d'usure, d'endurance, d'adhérence et de comportement. En effet ces véhicules doivent pouvoir se déplacer sur des routes ouvertes et dans des conditions de voyage et d'adhérence en sol mouillé qui ne sont pas celles d'un circuit de compétition, fermé, sur un temps très court pour un kilométrage finalement réduit. Comme les propriétaires de ces véhicules ne disposent pas d'une écurie pour changer leur pneumatiques en cas de pluie et après une heure de course quand ceux-ci sont usés, il est des paramètres de conception pour les pneumatiques selon l'invention qu'il est impossible d'écarter comme la présence de rainures dans la bande de roulement et la capacité de faire plusieurs milliers de kilomètre avec le pneumatique, donc avec une profondeur sculpture suffisante. De préférence les rainures du pneumatique constituent un taux de creux dans la bande de roulement à l'état neuf au moins égal à 10%. Le taux de creux est mesuré par le rapport du volume de creux constitué par toutes les découpures de la bande de roulement sur le volume de la bande de roulement radialement extérieur à la surface de fond de sculpture, creux compris.

Les composés caoutchouteux en question présentent une rigidité faible sur des plages de températures qui les rendent inutilisables pour des pneumatiques selon l'état de l'art pour des véhicules de tourisme soit que la performance usure soit dégradée par une faible hauteur sculpture ou par une hauteur sculpture usuelle ne compensant pas la faible rigidité du composé caoutchouteux, soit que la performance comportement soit trop dégradée en raison de l'association d'une hauteur sculpture usuelle et de la faible rigidité du composé caoutchouteux. Si cette faible rigidité s'accompagne d'une haute hystérèse, la performance résistance au roulement sera elle aussi dégradée. L'utilisation de ces composés caoutchouteux est donc un problème en soi.

Les composés caoutchouteux ayant un module G* à 40°C module de cisaillement dynamique G*, mesuré à 40° C à 10% de déformation crête à crête à 10Hz, au plus égal à 3,25 MPa, de préférence, au plus égal à 3 MPa, de préférence au plus égal à 2.5 MPa sont par exemple très pénalisés en comportement avec une hauteur sculpture tel qu'elle existe pour les véhicules de tourisme.

Les composés caoutchouteux ayant un module G* à 90°C module de cisaillement dynamique, mesuré à 90° C à 10 Hz sous une contrainte de 0.7 MPa, au plus égal à 1 MPa, de préférence au plus égal à 0.75 MPa, de préférence au plus égal à 0.5 MPa, sont très pénalisés en usure.

L'invention, à savoir d'associer les ondulations de la couche de sommet la plus radialement extérieure à un composé caoutchouteux de faible rigidité en surplomb de ladite ondulation, permet d'utiliser un composé caoutchouteux de basse rigidité quelle que soit la propriété associée visée. Si le composé caoutchouteux de la bande de roulement possède associée à sa basse rigidité, des performances en usure excellente, mais une résistance au roulement élevée, l'invention permet son utilisation en réduisant le volume de ce composé caoutchouteux et la hauteur cisaillée de ce composé caoutchouteux dans la bande de roulement. L'invention permet également de retrouver une valeur de résistance au roulement acceptable. De même pour une propriété d'adhérence sur sol sec élevée associée à la faible rigidité du composé caoutchouteux, la dégradation de performance comportement ou usure peut être résolue par l'invention.

Une des propriétés marquant l'adhérence est la valeur de l'hystérèse tan δ0 désignant la valeur de tan δ mesurée à la température de 0°C à 10 Hz et sous une contrainte de 0.7 MPa. Ainsi un mode de réalisation préféré de l'invention est que le composé caoutchouteux M a une valeur tan δ0 au moins égale à 0.5, de préférence au moins égale à 0.6.

Les ondulations doivent obligatoirement impacter la couche d'éléments de renforcement du sommet la plus radialement extérieure. L'invention a un effet sur le comportement, l'usure, la résistance au roulement en diminuant le volume de composé caoutchouteux de la bande de roulement en surplomb des ondulations. Les autres couche de sommet ainsi que l'armature carcasse peuvent ou pas être ondulées. Pour être perceptible, les ondulations doivent impacter au moins 10% de la surface de la couche de sommet la plus radialement extérieure et l'amplitude de l'ondulation qui permet de diminuer l'épaisseur du composé caoutchouteux, doit être au moins égale 1.5 mm.

De même pour un fonctionnement optimal, l'ondulation doit être bien positionnée par rapport à la profondeur de sculpture D. La distance radiale minimale (du) entre la surface radialement extérieure (SRE) de la couche de sommet (5) la plus radialement extérieure de l'armature de sommet (3) et la surface de roulement (21), est au plus égale à la profondeur D de la rainure majeure (24) la plus proche augmentée de 2 mm et au moins égale à la profondeur D de la rainure majeure (24) la plus proche diminuée de 2 mm. Pour une position trop radialement intérieure, l'ondulation ne permettra pas de résoudre le problème car elle ne diminuera pas suffisamment la hauteur de composé caoutchouteux en surplomb de l'ondulation. Si l'ondulation est positionnée trop radialement à l'extérieur, soit l'usure fera apparaître les couches de sommet, ce qui posera un problème d'endurance, soit une plus grande partie de la bande de roulement pourrait être amincie afin de gagner en résistance au roulement et la solution ne serait pas optimale.

Par ailleurs les pneumatiques de tourisme ont de préférence une profondeur de sculpture au moins égale à 6 mm et au plus égale à 10 mm. Cette profondeur est la profondeur maximale des rainures sur la bande de roulement. Elle est généralement mesurée à proximité du plan équateur du pneumatique. Ces valeurs sont un compromis d'aujourd'hui incluant les aspects d'usure, de résistance au roulement et de comportement entre autres performances..

Les ondulations peuvent être identiques pour tout plan méridien, ou pas, selon la sculpture et le choix du concepteur. Cette solution va à l'encontre des modes de fabrication des pneumatiques pour lesquels les couches de sommet sont posées sur des formes sensiblement cylindriques, les couches de sommet présentant dans le plan méridien, une courbure régulière sans point d'inflexion et donc sont réservés jusqu'à présent pour résoudre des problèmes de comportement.

Onduler des couches d'éléments de renforcement soumis à des efforts de compression va à l'encontre des préconisations pour lutter contre le flambement des structures. En effet, créer une discontinuité de rayon de courbure revient à créer des surcontraintes où pourrait avoir lieu le flambement. Cependant dans le pneumatique, les efforts sont très localisés de sorte qu'une partie du sommet est en tension quand une autre est en compression, à une échelle très inférieure à celle des ondulations. Ainsi les ondulations pratiquées dans les limites de l'invention, ne nuisent pas à l'endurance du pneumatique.

Ces ondulations permettent l'utilisation d'un composé caoutchouteux de la bande de roulement de faible rigidité à savoir dont le module de cisaillement dynamique G* à 40°C à 10% de déformation crête à crête à 10Hz, au plus égal à 3.25 MPa, au plus égal à 3 MPa, de préférence au plus égal à 2.5 MPa, au moins en surplomb des dites ondulations, non plus dans l'objectif de faire un gain en résistance au roulement et en comportement mais pour un gain d'adhérence sol sec avec un comportement amélioré et une résistance au roulement acceptable.

Selon les performances souhaitées et leur évolution dans le temps, il est possible que le composé caoutchouteux en surplomb de l'ondulation de la couche de sommet la plus radialement extérieure soit en totalité ou partiellement dans un composé caoutchouteux M de faible rigidité et avec un bon niveau d'adhérence sol sec. De préférence la surface de roulement comporte de ce composé caoutchouteux à l'état neuf.

La distance (du) est diminuée en créant au moins une ondulation dans la couche de sommet la plus radialement extérieure, de sorte que cette ondulation ou partie ondulée de la couche de sommet soit radialement extérieure à la partie de la couche de sommet à l'aplomb de la rainure majeure la plus proche de ladite ondulation. Il ne s'agit pas de considérer comme ondulée une couche de sommet non ondulée mais respectant le critère de la diminution de la distance du par une diminution de la profondeur de sculpture sur une zone donnée. Cette caractéristique est par ailleurs connue notamment pour des pneumatiques pour des véhicules de tourisme dont la profondeur sculpture est plus faible sur les bords axialement extérieurs du pneumatique, dites épaules, que dans les rainures majeures les plus proches. Dans les pneumatiques selon l'état de la technique, dans la partie aux épaules où la distance radiale (du) diminue, la couche sommet la plus radialement extérieure est soit au même rayon, soit radialement intérieure aux parties de la même couche de sommet à l'aplomb de la rainure majeure la plus proche.

L'invention fonctionne également en positionnant une ou des ondulations dans une ou des parties d'une ou des épaules du pneumatique.

Le sous-creux (d1) sera préférentiellement conservé dans les rainures majeures. Les rainures mineures ou les incisions sont moins sensibles aux perforations et agressions par des obstacles. Elles sont protégées par le composé caoutchouteux leur donnant leur caractéristique technique de rainure de faible profondeur ou de faible largeur.

A l'aplomb de l'ondulation de la couche de sommet la plus radialement extérieure, toutes ou une partie des autres couche de sommet peuvent être ondulées ainsi que la couche de carcasse en fonction de la rigidité structurelle recherchée pour le sommet. La couche de sommet la plus radialement extérieure doit être ondulée, elle peut être l'unique couche ondulée en utilisant un composé caoutchouteux de bourrage de l'épaisseur idoine disposé entre la couche de sommet la plus radialement extérieure et la couche de sommet, en général une couche de travail, radialement adjacente. Mais deux, trois, toutes les couches de sommet peuvent être ondulées de la sorte. Les couches de protection ou de frettage sont optionnelles dans un pneumatique et ne conditionnent pas l'intérêt de la solution.

Il apparaît que 10% de la surface de roulement avec un composé caoutchouteux amélioré en adhérence sol sec permet de mesurer une amélioration de la performance de sorte qu'il est suffisant que 10% de la surface radialement extérieure de la couche de sommet la plus radialement extérieure soit dans la partie des ondulations à une distance radiale au moins égale à 1.5mm des points les plus radialement intérieurs de ladite couche de sommet à l'aplomb de la rainure majeure la plus proche.

L'amplitude de cette ondulation doit être au moins égale à 1.5 mm pour avoir des effets significatifs à l'échelle du pneumatique. Ainsi la différence entre la distance radiale (du) entre la surface radialement extérieure (SRE) de la couche de sommet la plus radialement extérieure et la surface de roulement, est inférieure d'au moins 1.5 mm à la distance radiale (dc) entre la surface radialement extérieure (SRE) de la couche de sommet la plus radialement extérieure et la surface de roulement, distance à l'aplomb du centre de la face de fond de la rainure majeure la plus proche de ladite ondulation, sur au moins 10% de la surface de la surface radialement extérieure (SRE) de la couche de sommet en une ou plusieurs ondulations.

Pour augmenter la rigidité du sommet et amplifier le couplage entre les ondulations et le composé caoutchouteux M situé à l'aplomb de ou des ondulations, une solution préférée est que plusieurs couches de sommet, la couche de sommet la plus radialement extérieure et la couche de sommet radialement adjacente à celle-ci, voire toutes les couches de sommet soient ondulées, à savoir soient à une distance les unes des autres sensiblement constante sur toute la largeur du sommet à l'exception des 3 derniers centimètres de leurs extrémités axiales. Ces extrémités axiales reçoivent en effet parfois des composés caoutchouteux de découplage.

La solution optimale prend en compte les caractéristiques du pneumatique et possiblement du véhicule. Une optimisation peut être menée en fonction du caractère directionnel du pneumatique, de son asymétrie, du carrossage du véhicule.

Préférentiellement sur au moins 10%, préférentiellement au moins 20% et au plus 85%, de la surface radialement extérieure (SRE) de la couche de sommet la plus radialement extérieure, la distance radiale (du) entre la surface radialement extérieure (SRE) de la couche de sommet la plus radialement extérieure et la surface de roulement est inférieure d'au moins 1.5 mm, préférentiellement 2 mm, à la distance radiale (dc) entre la surface radialement extérieure (SRE) de la couche de sommet la plus radialement extérieure et la surface de roulement, distance à l'aplomb du centre de la face de fond de la rainure majeure la plus proche de ladite ondulation. Les paramètres de conception permettant le réglage des performances adhérence, usure, résistance au roulement, comportement sont :
- l'étendue de la surface de contact dans le composé caoutchouteux M de faible rigidité et de haute adhérence et donc des ondulations de la couche de sommet la plus radialement extérieure, sachant que le taux d'entaillement de la sculpture, rarement inférieur à 10% ou 15%, la limite à au plus 85% (100%-15%). Plus l'ondulation est étendue plus l'utilisation du composé caoutchouteux est intéressant en adhérence et moins pénalisant en résistance au roulement. On pourra ainsi régler le nombre d'ondulations et le pourcentage de composé caoutchouteux M de faible rigidité et de haute adhérence en fonction des performances désirées en adhérence sol sec, en résistance au roulement et en comportement dynamique.
- L'amplitude de l'ondulation au moins égale à 1.5 mm mais limitée à 5 mm en raison des rayons de courbures à imposer aux couches de travail métalliques, rigides et donc peu déformables qui permet de régler le cisaillement des composé caoutchouteux de la bande de roulement en lien avec la résistance au roulement et le comportement dynamique.

Une solution préférée est donc que sur au moins 10%, préférentiellement au moins 20% et au plus 85%, de la surface radialement extérieure (SRE) de la couche de sommet la plus radialement extérieure, la distance radiale (du) entre la surface radialement extérieure (SRE) de la couche de sommet la plus radialement extérieure et la surface de roulement est inférieure d'au plus 5 mm, préférentiellement d'au plus 3 mm à la distance radiale (dc) entre la surface radialement extérieure (SRE) de la couche de sommet la plus radialement extérieure et la surface de roulement, distance à l'aplomb du centre de la face de fond de la rainure majeure la plus proche de ladite ondulation.

Pour une performance optimale en perforation et agression du sommet, sans pénaliser la résistance au roulement, la distance radiale (d1) entre la surface radialement extérieure (SRE) de la couche de sommet la plus radialement extérieure et la face de fond des rainures majeures est au moins égale à 1 mm et au plus égale à 5 mm, préférentiellement au moins égale à 2 mm et au plus égale à 4 mm. En deçà des limites inférieures, le pneumatique pourrait être trop sensible aux agressions. Au-delà des limites supérieures, la résistance au roulement du pneumatique serait pénalisée.

Il est avantageux que la bande de roulement, par exemple une rainure majeure de la bande de roulement, comprenne au moins un témoin d'usure, et que la distance radiale minimale (du) entre la surface radialement extérieure (SRE) de la couche la plus radialement extérieure de l'armature de sommet et la surface de roulement soit au moins égale à la distance radiale (df) entre la surface de roulement et le point le plus radialement extérieur du témoin d'usure. En effet, il est important que l'utilisateur puisse percevoir que le pneumatique est usé, grâce au témoin d'usure et cela avant de voir les éléments de renforcement de la couche la plus radialement extérieure de l'armature de sommet apparaître au niveau de la surface de roulement.

Avantageusement toutes parties de la bande de roulement et de la surface de roulement en surplomb des ondulations de la couche de sommet (5) la plus radialement extérieure, comprennent au moins 50% du composé caoutchouteux M, de préférence 75%, de préférence 100%, afin de tirer le plus grand avantage des propriétés du composé caoutchouteux M.

Dans une réalisation préférée de l'invention, la partie de la bande de roulement radialement extérieure aux témoins d'usure est composée de 100% du composé caoutchouteux M, afin de tirer avantage des propriétés du composé caoutchouteux M jusqu'au retrait du pneumatique pour usure.

Préférentiellement la profondeur D d'une rainure majeure (24) est au moins égale à 6 mm, et au plus égale à 10 mm. Les profondeurs de sculpture entre 6 et 10 mm permettent un bon compromis entre les performances en usure et en résistance au roulement dans de nombreux pneumatiques de tourisme.

Dans le cas où la couche d'éléments de renforcement la plus radialement extérieurs de l'armature de sommet est une couche de frettage, il est avantageux que la couche d'éléments de renforcement la plus radialement extérieure de l'armature de sommet comprenne des éléments de renforcement en textile, de préférence de type polyamide aliphatique, polyamide aromatique, combinaison de polyamide aliphatique et de polyamide aromatique, polytéréphtalate d'éthylène ou rayonne, parallèles entre eux et formant, avec la direction circonférentielle (XX') du pneumatique, un angle B au plus égal à 10° en valeur absolue.

Une solution préférée est qu'au moins un composé caoutchouteux de bourrage ayant une épaisseur radiale au moins égale à 0.3 mm est positionné à l'aplomb de toute ondulation de la couche de sommet la plus radialement extérieure. Ceci afin de permettre l'ondulation des couches de sommet à la fabrication et à la cuisson. Ces composés caoutchouteux de bourrages peuvent être présents sur la totalité de la circonférence du pneumatique ou disposés dans certaines portions du pneumatique selon les besoins. Il est possible de disposer plusieurs composés caoutchouteux de bourrage à l'aplomb de la ou des ondulations à différentes valeurs de rayons avec différentes propriétés en fonction du cahier des charges du pneumatiques. Si un seul composé caoutchouteux de bourrage est disposé, son épaisseur maximale est approximativement égale, pour une ondulation donnée, à la distance radiale entre le point le plus radialement extérieur de la surface radialement extérieure de la couche de sommet la plus radialement extérieure au niveau de l'ondulation et la surface radialement extérieure de la couche de sommet la plus radialement extérieure à l'aplomb du centre de la face de fond de la rainure majeure la plus proche de ladite ondulation.

Il est avantageux que, la bande de roulement étant constituée par un ou plusieurs composés caoutchouteux, le composé caoutchouteux de bourrage a une perte dynamique maximale tanδ1, mesurée à une température de 23°C à 10 Hz, au plus égale et préférentiellement inférieure de 30% à la perte dynamique maximale tanδ2 du composé caoutchouteux le moins hystérétique de la bande de roulement et radialement extérieurs aux surfaces de fond des rainures majeures, mesurée à une température de 23°C et sous une contrainte de 0.7 MPa à 10 Hz. Pour un composé caoutchouteux de bourrage de même hystérèse, le gain en résistance au roulement est donné seulement par la diminution des sollicitations en cisaillement que ce composé caoutchouteux subit. Le composé caoutchouteux de bourrage ne subissant pas les mêmes contraintes que le composé caoutchouteux constitutif de la bande de roulement, il est possible de modifier ses caractéristiques de manière à améliorer davantage la résistance au roulement. 30% de baisse d'hystérèse amène un gain significativement plus élevé pour l'invention. Le composé caoutchouteux de la bande de roulement le moins hystérétique, est le composé caoutchouteux composant une portion de la bande de roulement radialement extérieure à la surface de fond de sculpture dont la valeur tanδ1 maximale, mesurée à une température de 23°C et sous une contrainte de 0.7 MPa à 10 Hz est la plus faible de tous les composés caoutchouteux composant une portion de la bande de roulement radialement extérieure à la surface de fond de sculpture.

On enregistre la réponse d'un échantillon de composition réticulée (éprouvette cylindrique de préférence de 4 mm d'épaisseur et de 400 mm2 de section), soumis à une sollicitation sinusoïdale en cisaillement simple alterné, à la fréquence de 10 Hz, à 23°C selon la norme ASTM D 5992 - 96. On effectue un balayage en amplitude de déformation crête à crête de 0,1 à 100 % (cycle aller) puis de 100 à 0,1 % (cycle retour). Le résultat exploité est le facteur de perte (tan(δ)). Pour le cycle retour, on indique la valeur maximale de tan(δ) observée (tan(δ)max à 23°C).

Il est préféré que l'armature de sommet consiste en une couche de frettage et une armature travail de 2 couches de travail ayant des angles opposés, comme de nombreuses architectures de sommet actuelles.

### BREVE DESCRIPTION DES DESSINS

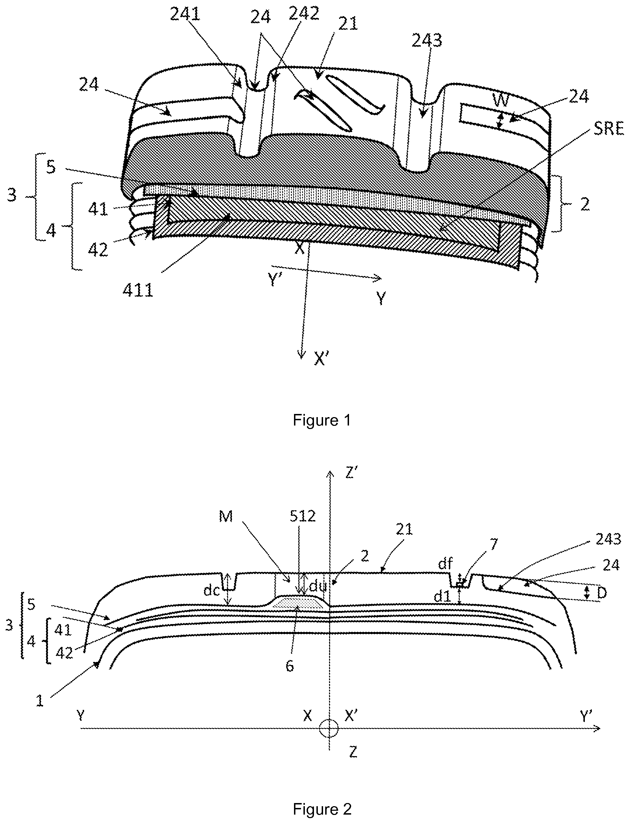

Les caractéristiques et autres avantages de l'invention seront mieux compris à l'aide des figures 1 à 4, les dites figures n'étant pas représentées à l'échelle mais de façon simplifiée, afin de faciliter la compréhension de l'invention :
- La figure 1 est une partie de pneumatique, en particulier son architecture et sa bande de roulement.
- la figure 2 représente une coupe méridienne du sommet d'un pneumatique selon l'invention et illustre les différentes distances radiales, du, d1, D, df, dc et un composé caoutchouteux de bourrage (6) propre à créer une ondulation de la couche de sommet, couche de travail ou couche de frettage, la plus radialement extérieure, cette ondulation comprenant en son surplomb un composé caoutchouteux M de faible rigidité.

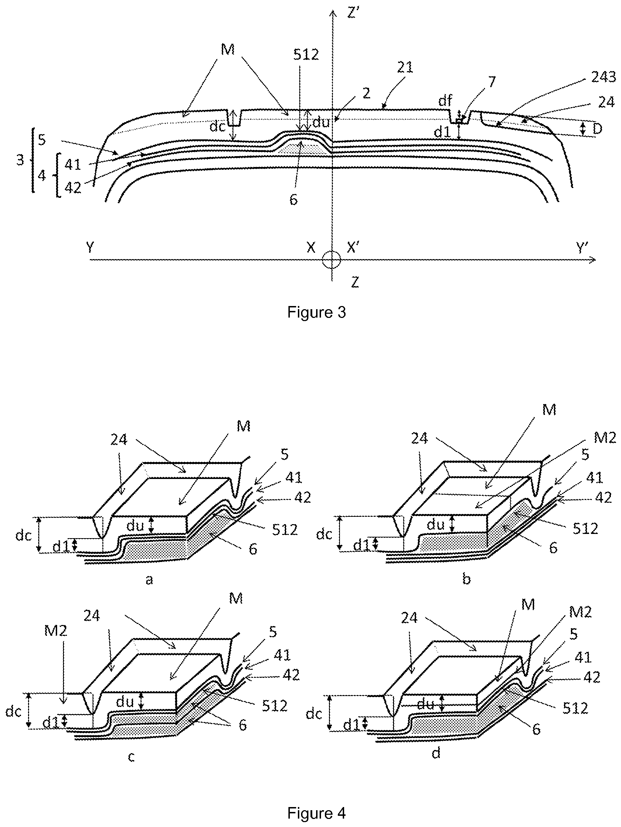

- la figure 3 représente une coupe méridienne du sommet d'un pneumatique selon l'invention et illustre les différentes distances radiales, du, d1, D, df, dc et un composé caoutchouteux de bourrage (6) propre à créer une ondulation de l'armature de sommet, des couches de travail et de la couche de frettage, cette ondulation comprenant en son surplomb et dans 100% de la partie de la bande de roulement radialement extérieure aux témoins d'usure, un composé caoutchouteux M de faible rigidité.
- la figure 4 (a, b, c, d) représente une portion du sommet du pneumatique délimitée circonférentiellement et axialement par des rainures majeures (24) délimitant également une ondulation (512) de la couche de sommet la plus radialement extérieure (5) pour un pneumatique ayant une couche de frettage (5) et deux couches de travail (41,42). Elle illustre la possibilité d'agencer, à l'aplomb de l'ondulation (512), une ou plusieurs composés caoutchouteux de bourrage (6), pouvant avoir des propriétés différentes en fonction des besoins spécifiques liées à leurs positions radiales, axiales et circonférentielles respectives ainsi que diverses répartitions du composé caoutchouteux M de faible rigidité dans la bande de roulement.

### DESCRIPTION DETAILLEE DES DESSINS

La figure 1 représente une vue en perspective d'une partie du sommet d'un pneumatique. A chaque plan méridien est associé un repère cartésien (XX', YY', ZZ'). Le pneumatique comporte une bande de roulement 2 destinée à entrer en contact avec un sol par l'intermédiaire d'une surface de roulement 21. Dans la bande de roulement, sont disposées des rainures 24 de largeur W possiblement différentes d'une rainure à l'autre. Le pneumatique comprend en outre une armature de sommet 3 comprenant une armature de travail 4 et ici pour l'exemple, une armature de frettage 5. L'armature de travail comprend au moins une couche de travail et ici pour l'exemple deux couches de travail 41 et 42 comprenant chacune des éléments de renforcement parallèles entre eux (411 pour la couche de sommet 41). Est représentée également la surface radialement extérieure (SRE) de la couche de travail (41) la plus radialement extérieure.

La figure 2 représente schématiquement la coupe méridienne du sommet du pneumatique selon l'invention. Elle illustre en particulier la couche de carcasse 1, une ondulation (512) de la couche de sommet la plus radialement extérieure (5) et un composé caoutchouteux de bourrage (6) disposé à l'aplomb de celle-ci. La figure 2 illustre également les distances radiales suivantes :
- D: la profondeur d'une rainure, distance radiale maximale entre la surface de roulement (21) et la face de fond (243) de la rainure,
- dc : distance radiale entre la surface radialement extérieure (SRE) de la couche de sommet (5) la plus radialement extérieure et la surface de roulement (21), distance mesurée à l'aplomb du point le plus radialement intérieur de la face de fond (243) de la rainure majeure (24) la plus proche de ladite ondulation (512),
- du : distance radiale minimale (du) entre la surface radialement extérieure (SRE) de la couche de sommet (5) la plus radialement extérieure de l'armature et la surface de roulement (21),
- df : distance radiale entre la surface de roulement (21) et le point le plus radialement extérieur du témoin d'usure (7),
- d1 : la distance minimale entre la surface radialement extérieure (SRE) de la couche de sommet la plus radialement extérieure (5) et la face de fond (243) des rainures majeures (24).

La figure 3 représente schématiquement la coupe méridienne du sommet du pneumatique selon l'invention. Elle illustre en particulier une ondulation de l'armature de sommet constituée de deux couches de travail (41 et 42) et de la couche de frettage (5) la couche de sommet la plus radialement extérieure, et un composé caoutchouteux de bourrage (6) disposée à l'aplomb de l'ondulation sous la couche de travail (42) la plus radialement intérieure.

Une coupe méridienne du pneumatique est obtenue par découpage du pneumatique selon deux plans méridiens. Cette coupe sert à déterminer les différentes distances radiales, le centre des faces de fond des rainures et des sillons.

La figure 4a représente une ondulation 512 de l'armature de sommet, les deux couches de travail (41 et 42) et la couche de frettage (5). Les ondulations sont limitées axialement et circonférentiellement, à un motif de la sculpture. Ces motifs de sculpture peuvent se répéter dans la sculpture du pneumatique avec ou sans ondulations à leurs aplombs. La somme des aires des surfaces des ondulations doit au moins représenter 10% de la surface totale de la couche de sommet la plus radialement extérieure pour que l'effet soit intéressant. La figure 4 abcd montre également comment, il est possible d'obtenir une ondulation par la pose d'un composé caoutchouteux de bourrage 6 radialement intérieur aux différentes couches d'éléments de renforcement de l'armature de sommet. Dans ces motifs, le composé caoutchouteux M peut être l'unique composé caoutchouteux de la bande de roulement, ou du motif ou un des composés caoutchouteux. M2 dans les figures 4b, 4c, 4d représente un deuxième composé caoutchouteux, différent de M, de la bande de roulement.

L'invention a été réalisée sur un pneumatique A de dimension 305/30 ZR20 destiné à équiper un véhicule de tourisme. Les profondeurs D des rainures de la sculpture sont comprises entre 5 mm aux épaules et 7 mm à l'équateur, pour des largeurs W variant entre 4 et 15 mm. L'armature sommet est composée de deux couches de travail dont les éléments de renforcement font un angle de + ou - 38° avec la direction circonférentielle et d'une couche de frettage textile dont les éléments de renforcement font un angle de + ou - 3° avec la direction circonférentielle. La couche de sommet la plus radialement extérieure, la couche de frettage 5, est ondulée sur 50% de sa surface. Les ondulations sont réalisées à l'aide de composés caoutchouteux de bourrage radialement intérieurs à la couche de travail la plus radialement intérieure, situés plus précisément entre la couche de carcasse et la couche de sommet la plus radialement intérieure. Les ondulations ont des amplitudes de 2 mm, c'est-à-dire les distances radiales (du) entre la surface radialement extérieure (SRE) de la couche de sommet (5) la plus radialement extérieure et la surface de roulement au niveau des ondulations (512) sont inférieures de 2 mm aux distances radiales (dc) entre la surface radialement extérieure (SRE) de la couche de sommet (5) la plus radialement extérieure et la surface de roulement (21), distances à l'aplomb du point le plus radialement intérieur de la face de fond des rainures majeures (24) les plus proches des dites ondulations (512). La distance radiale (d1) entre la surface radialement extérieure (SRE) de la couche de sommet la plus radialement extérieure (5) et la face de fond (243) des rainures majeures (24), est égale à 1,5 mm. La bande de roulement est composée d'un unique composé caoutchouteux CC1 ayant les caractéristiques suivantes :
- G* mesuré à 40° C à 10% de déformation crête à crête à 10Hz, est égal à 2.3 MPa
- un module de cisaillement dynamique G*, mesuré à 90° C à 10 Hz et sous une contrainte de 0.7 MPa, égal à 0.45 MPa,
- tan δ mesurée à la température de 0°C à 10 Hz et sous une contrainte de 0.7 MPa est égale à 0.58

Les pneumatiques A ont été comparés avec les pneumatiques B, C de même dimension, possédant les mêmes caractéristiques à cela près que :
- Le pneumatique B est tel que ses couches de sommet ne sont pas ondulées et sa bande de roulement est constituée d'un unique composé caoutchouteux CC2.
- Le pneumatique C est tel que ses couches de sommet ne sont pas ondulées et la bande de roulement est constitué d'un unique composé caoutchouteux CC1 similaire au pneumatique A.

Le composé caoutchouteux CC2 ne correspondant pas à l'invention, est un composé caoutchouteux adapté à son utilisation dans la bande de roulement et a les propriétés suivantes :
- G* mesuré à 40° C à 10% de déformation crête à crête à 10Hz, est égal à 3.3 MPa
- un module de cisaillement dynamique G*, mesuré à 90° C à 10 Hz et sous une contrainte de 0.7 MPa, égal à 1.05 MPa,
- tan δ mesurée à la température de 0°C à 10 Hz et sous une contrainte de 0.7 MPa est égale à 0.48

Le composé caoutchouteux de bourrage utilisé pour créer les ondulations du pneumatique A, a une perte dynamique tanδ1, mesurée à une température de 23°C et sous une contrainte de 0.7 MPa à 10 Hz, inférieure de 60% à celle du composé caoutchouteux CC1 constitutif de la bande de roulement de A

Les performances du pneumatique selon l'invention sont visibles selon le tableau suivant en base 100. Une évaluation supérieure à 100 signifie que la performance du pneumatique est supérieure à celle du témoin. Une meilleure performance en résistance au roulement, donc supérieure à 100, signifie que la résistance au roulement du pneumatique est inférieure à celle du témoin. Une adhérence sol sec, supérieure à 100, signifie que le temps au tour sur le circuit de test est inférieur à celui du pneumatique témoin

**Tableau I : performance de l'invention**

| | résistance au roulement | Adhérence sol sec | Usure | Comportement |
|---|---|---|---|---|
| A - invention | 100 | 102 | 100 | 100 |
| B | 100 | 100 | 100 | 100 |
| C | 92 | 101.5 | 90 | 90 |

L'objectif de l'invention est de permettre l'utilisation de composé caoutchouteux « mou » ou de faible rigidité dans la bande de roulement. Les pneumatiques de l'état de l'art B, qui n'ont ni couches de sommet ondulées ni composé caoutchouteux de la bande de roulement de faible rigidité, servent de témoin.

L'utilisation de composé caoutchouteux de faible rigidité, tels que définis, dans la bande de roulement sur une architecture sans ondulation, visible sur le pneumatique C, amène des déchéances inacceptables dans toutes les performances résistance au roulement, usure, comportement et un unique gain en adhérence sol-sec, vis-à-vis du pneumatique témoin B. Vu l'usage sportif de la dimension et sa valeur élevée en résistance au roulement, la dégradation de la résistance au roulement, est telle que le pneumatique C n'est plus acceptable au vu des normes environnementales.

L'invention, visible sur le pneumatique A, permet non seulement de palier toutes les dégradations amenées par l'utilisation du composé caoutchouteux de faible rigidité CC1 mais il permet de manière surprenante d'améliorer l'adhérence sol sec a priori amenée par le composé caoutchouteux CC1 de 25% supplémentaires par le couplage entre l'architecture et le composé caoutchouteux de faible rigidité.

Le gain en résistance au roulement de l'invention a été évalué sur une machine standard pour des mesures normalisées ISO 2850 :2009.

Le comportement est évalué par une mesure de la caractéristique Dz du modèle de comportement des pneumatiques, dit Pacejka, bien connue de l'homme de l'art, à une pression à chaud de 3b.

Les pneumatiques ont également été montés sur un véhicule de type sportif et testés sur un circuit virageux propre à générer des efforts de transversaux importants. Un pilote professionnel, formé à l'évaluation des pneumatiques, compare les pneumatiques A selon l'invention, les pneumatiques B et les pneumatiques C selon l'état de la technique et suivant un processus d'essais rigoureux, dans les mêmes conditions de température, de condition de sol de roulage, sans connaître les caractéristiques des pneumatiques testés, en répétant la mesure. Le pilote note les pneumatiques. Dans tous les essais effectués, les pneumatiques A selon l'invention surclasse les pneumatiques B et C en terme de comportement véhicule, tenue de route, sur sol sec et en terme d'adhérence.

L'usure est évaluée sur des tests où des véhicules de même type se suivent suivant un circuit déterminé représentant un usage de la clientèle. Les véhicules sont conduits par des pilotes professionnels, formés à l'évaluation des pneumatiques et ayant le même type de conduite suivant un processus d'essais rigoureux, dans les mêmes conditions de température, de condition de sol de roulage, sans connaître les caractéristiques des pneumatiques testés, en répétant la mesure. Après chaque journée de test, les hauteurs de sculpture restantes sont mesurées. L'usure donnée ici correspond au gain en usure après un roulage correspondant à 30% de la vie du pneumatique.

## Revendications

1. Pneumatique (1), pour véhicule de tourisme comprenant :
• une bande de roulement (2) destinée à entrer en contact avec un sol par l'intermédiaire d'une surface de roulement (21) comprenant des rainures (24), une rainure (24) formant un espace débouchant sur la surface de roulement (21) et étant délimitée par deux faces latérales principales (241, 242) reliées par une face de fond (243), ayant une largeur W définie par la distance moyenne entre les deux faces latérales (241, 242) et une profondeur D définie par la distance radiale maximale entre la surface de roulement (21) et la face de fond (243),
• au moins une rainure (24), étant une rainure majeure, ayant une largeur W au moins égale à 1 mm et une profondeur D au moins égale à 4 mm,
le pneumatique (1) comprenant en outre une armature de sommet (3), radialement intérieure à la bande de roulement (2), comprenant au moins une couche d'éléments de renforcement (41, 42, 5), nommée couche de sommet,
la au moins une couche d'éléments de renforcement (41, 42, 5) s'étendant radialement depuis une surface radialement intérieure (SRI) jusqu'à une surface radialement extérieure (SRE),
couche de sommet (5) la plus radialement extérieure comprend au moins une ondulation (512),
la au moins une ondulation (512) de la couche de sommet la plus radialement extérieure est telle que la portion de la couche de sommet la plus radialement extérieure (5) de l'ondulation (512) est radialement extérieure aux points de ladite couche de sommet la plus radialement extérieure à l'aplomb du centre de la face de fond (243) de la rainure majeure (24) la plus proche de ladite ondulation (512),
la au moins une ondulation (512) de la couche de sommet (5) la plus radialement extérieure est telle que, sur au moins 10% de la surface radialement extérieure (SRE) de ladite couche de sommet (5), la distance radiale (du) entre la surface radialement extérieure (SRE) de la couche de sommet (5) la plus radialement extérieure et la surface de roulement (21), est inférieure d'au moins 1.5 mm à la distance radiale (dc) entre la surface radialement extérieure (SRE) de la couche de sommet (5) la plus radialement extérieure et la surface de roulement (21), distance à l'aplomb du centre de la face de fond (243) de la rainure majeure (24) la plus proche de ladite ondulation (512),
la distance radiale minimale (du) entre la surface radialement extérieure (SRE) de la couche de sommet (5) la plus radialement extérieure de l'armature de sommet (3) et la surface de roulement (21), est au plus égale à la profondeur D de la rainure majeure (24) la plus proche augmentée de 2 mm et au moins égale à la profondeur D de la rainure majeure (24) la plus proche diminuée de 2 mm.
**caractérisé en ce que** la partie de la bande de roulement en surplomb d'au moins une ondulation de la couche de sommet la plus radialement extérieure comprend au moins 30% d'un composé caoutchouteux M dont le module de cisaillement dynamique G*, mesuré à 40° C à 10% de déformation crête à crête à à 10Hz selon la norme ASTM D 5992 - 96, est au plus égal à 3,25 MPa.

2. Pneumatique selon la revendication 1 **dans lequel** le composé caoutchouteux M a un module de cisaillement dynamique G*, mesuré à 40° C à 10% de déformation crête à crête à 10Hz, au plus égal à 3 MPa, de préférence au plus égal à 2.5 MPa.

3. Pneumatique selon l'une ou l'autre des revendications 1 ou 2, **dans lequel** le composé caoutchouteux M a un module de cisaillement dynamique G*, mesuré à 90° C à 10 Hz et sous une contrainte de 0.7 MPa, est au plus égal à 1 MPa, de préférence au plus égal à 0.75 MPa, de préférence au plus égal à 0.5 MPa.

4. Pneumatique selon l'une quelconque des revendications 1 à 3, **dans lequel** le composé caoutchouteux M a une valeur tan δ0 au moins égale à 0.5, de préférence au moins égale à 0.6, où tan δ0 désigne la valeur de tan δ mesurée à la température de 0°C à 10 Hz et sous une contrainte de 0.7 MPa.

5. Pneumatique selon l'une quelconque des revendications 1 à 4, **dans lequel** sur au moins 10%, préférentiellement au moins 20% et au plus 85%, de la surface radialement extérieure (SRE) de la couche de sommet (5) la plus radialement extérieure, la distance radiale (du) entre la surface radialement extérieure (SRE) de la couche de sommet (5) la plus radialement extérieure et la surface de roulement (21) est inférieure d'au moins 1.5 mm, préférentiellement 2 mm, à la distance radiale (dc) entre la surface radialement extérieure (SRE) de la couche de sommet (5) la plus radialement extérieure et la surface de roulement (21), distance à l'aplomb du centre de la face de fond (243) de la rainure majeure (24) la plus proche.

6. Pneumatique selon l'une quelconque des revendications 1 à 5, **dans lequel** sur au moins 10%, préférentiellement au moins 20% et au plus 85%, de la surface radialement extérieure (SRE) de la couche de sommet (5) la plus radialement extérieure, la distance radiale (du) entre la surface radialement extérieure (SRE) de la couche de sommet (5) la plus radialement extérieure et la surface de roulement (21), est inférieure d'au plus 5 mm, préférentiellement d'au plus 3 mm à la distance radiale (dc) entre la surface radialement extérieure (SRE) de la couche de sommet (5) la plus radialement extérieure et la surface de roulement (21), distance à l'aplomb du centre de la face de fond (243) de la rainure majeure (24) la plus proche.

7. Pneumatique selon l'une quelconque des revendications 1 à 6, dans lequel la distance radiale (d1) entre la surface radialement extérieure (SRE) de la couche de sommet la plus radialement extérieure (5) et la face de fond (243) des rainures majeures (24) est au moins égale à 1 mm et au plus égale à 5 mm, préférentiellement au moins égale à 2 mm et au plus égale à 4 mm.

8. Pneumatique selon l'une quelconque des revendications 1 à 7, , où au moins une rainure majeure (24) de la bande de roulement (2) comprenant au moins un témoin d'usure (7), **dans lequel** la distance radiale minimale (du) entre la surface radialement extérieure (SRE) de la couche de sommet (5) la plus radialement extérieure de l'armature de sommet (3) et la surface de roulement (21) est au moins égale à la distance radiale (df) entre la surface de roulement (21) et le point (71) le plus radialement extérieur du témoin d'usure (7).

9. Pneumatique selon l'une quelconque des revendications 1 à 8, **dans lequel** toutes parties de la bande de roulement et de la surface de roulement en surplomb des ondulations de la couche de sommet (5) la plus radialement extérieure, comprennent au moins 50% du composé caoutchouteux M, de préférence 75%, de préférence 100%.

10. Pneumatique selon l'une quelconque des revendications 1 à 9, et comprenant au moins un témoin d'usure **dans lequel** la partie de la bande de roulement radialement extérieure aux témoins d'usure est composée de 100% du composé caoutchouteux M.

11. Pneumatique selon l'une quelconque des revendications 1 à 10, **dans lequel** la profondeur D d'une rainure majeure (24) est au plus égale à 10 mm.

12. Pneumatique selon l'une quelconque des revendications 1 à 11, **dans lequel** le taux de creux dans la bande de roulement est au moins égal à 10%.

13. Pneumatique selon l'une quelconque des revendications 1 à 12, **dans lequel** la couche de sommet (5) d'éléments de renforcement la plus radialement extérieure de l'armature de sommet (3) comprend des éléments de renforcement en textile, de préférence de type polyamide aliphatique, polyamide aromatique, combinaison de polyamide aliphatique et de polyamide aromatique, polytéréphtalate d'éthylène ou rayonne, parallèles entre eux et formant, avec la direction circonférentielle (XX') du pneumatique, un angle B au plus égal à 10° en valeur absolue.

14. Pneumatique, selon l'une quelconque des revendications 1 à 13, **dans lequel** au moins un composé caoutchouteux de bourrage (6) ayant une épaisseur radiale au moins égale à 0.3 mm, est positionnée à l'aplomb de l'ondulation (512) de la couche de sommet (5) la plus radialement extérieure.

15. Pneumatique selon la revendication 14, **dans lequel** le composé caoutchouteux de bourrage (6) a une perte dynamique maximale tanδ1, mesurée à une température de 23°C à 10 Hz, au plus égale et préférentiellement inférieure de 30% à la perte dynamique maximale tanδ2 du composé caoutchouteux le moins hystérétique de la bande de roulement (2) et radialement extérieurs aux surfaces de fond des rainures majeures, mesurée à une température de 23°C et sous une contrainte de 0.7 MPa à 10 Hz.

## Patentansprüche

1. Reifen (1) für einen Personenkraftwagen, umfassend:
• einen Laufstreifen (2), der dazu bestimmt ist, mit einem Boden über eine Lauffläche (21) in Kontakt zu gelangen, die Rillen (24) umfasst, wobei eine Rille (24) einen Raum bildet, der an der Lauffläche (21) mündet und durch zwei seitliche Hauptflächen (241, 242), die durch eine Bodenfläche (243) verbunden sind, begrenzt wird, aufweisend eine Breite W, die durch den mittleren Abstand zwischen den beiden Seitenflächen (241, 242) definiert ist, und eine Tiefe D, die durch den maximalen radialen Abstand zwischen der Lauffläche (21) und der Bodenfläche (243) definiert ist,
• wobei mindestens eine Rille (24), die eine Hauptrille ist, eine Breite W von mindestens 1 mm und eine Tiefe D von mindestens 4 mm aufweist,
wobei der Luftreifen (1) ferner eine Scheitelbewehrung (3) radial innerhalb des Laufstreifens (2) umfasst, die mindestens eine Lage aus Verstärkungselementen (41, 42, 5) umfasst, Scheitellage genannt,
wobei die mindestens eine Lage aus Verstärkungselementen (41, 42, 5) sich radial von einer radial inneren Fläche (SRI) bis zu einer radial äußeren Fläche (SRE) erstreckt, wobei die radial äußerste Scheitellage (5) mindestens eine Wölbung (512) umfasst,
wobei die mindestens eine Wölbung (512) der radial äußersten Scheitellage derart ist, dass der Abschnitt der radial äußersten Scheitellage (5) der Wölbung (512) radial außerhalb der Punkte der radial äußersten Scheitellage lotrecht zum Mittelpunkt der Bodenfläche (243) der zur Wölbung (512) nächstgelegenen Hauptrille (24) ist,
wobei die mindestens eine Wölbung (512) der radial äußersten Scheitellage (5) derart ist, dass auf mindestens 10 % der radial äußeren Fläche (SRE) der Scheitellage (5) der radiale Abstand (du) zwischen der radial äußeren Fläche (SRE) der äußerten Scheitellage (5) und der Lauffläche (21) um mindestens 1,5 mm kleiner ist als der radiale Abstand (dc) zwischen der radial äußeren Fläche (SRE) der radial äußersten Scheitellage (5) und der Lauffläche (21), Abstand lotrecht zum Mittelpunkt der Bodenfläche (243) der zur Wölbung (512) nächstgelegenen Hauptrille (24),
wobei der minimale radiale Abstand (du) zwischen der radial äußeren Fläche (SRE) der radial äußersten Scheitellage (5) der Scheitelbewehrung (3) und der Lauffläche (21) höchstens gleich der Tiefe D der nächstgelegenen Hauptrille (24) zuzüglich von 2 mm ist und mindestens gleich der Tiefe D nächstgelegenen Hauptrille (24) abzüglich von 2 mm ist,
**dadurch gekennzeichnet, dass** der Teil des Laufstreifens über mindestens einer Wölbung der radial äußersten Scheitellage mindestens 30 % einer Kautschukzusammensetzung M umfasst, deren dynamischer Schermodul G*, gemessen bei 40 °C bei 10 % Verformung Spitze bis Spitze bei 10 Hz gemäß der Norm ASTM D 5992 - 96, höchstens 3,25 Mpa beträgt.

2. Luftreifen nach Anspruch 1, bei dem die Kautschukzusammensetzung M einen dynamischen Schermodul G*, gemessen bei 40 °C bei 10 % Verformung Spitze bis Spitze bei 10 Hz, von höchstens 3 MPa, bevorzugt von höchstens 2,5 MPa aufweist.

3. Luftreifen nach einem der Ansprüche 1 oder 2, bei dem die Kautschukzusammensetzung M einen dynamischen Schermodul G*, gemessen bei 90 °C bei 10 Hz und unter einer Beanspruchung von 0,7 Mpa, von höchstens 1 MPa, bevorzugt höchstens 0,75 MPa, bevorzugt höchstens 0,5 MPa aufweist.

4. Luftreifen nach einem der Ansprüche 1 bis 3, bei dem die Kautschukzusammensetzung M einen Wert tan δ0 von mindestens 0,5, bevorzugt mindestens 0,6 aufweist, wobei tan δ0 den Wert von tan δ bezeichnet, der bei der Temperatur von 0 °C bei 10 Hz und unter einer Beanspruchung von 0,7 MPa gemessen wird.

5. Luftreifen nach einem der Ansprüche 1 bis 4, bei dem auf mindestens 10 %, bevorzugt mindestens 20 % und höchstens 85 % der radial äußeren Fläche (SRE) der radial äußersten Scheitellage (5) der radiale Abstand (du) zwischen der radial äußeren Fläche (SRE) der radial äußersten Scheitellage (5) und der Lauffläche (21) um mindestens 1,5 mm, bevorzugt 2 mm, kleiner ist als der radiale Abstand (dc) zwischen der radial äußeren Fläche (SRE) der radial äußersten Scheitellage (5) und der Lauffläche (21), Abstand lotrecht zum Mittelpunkt der Bodenfläche (243) der nächstgelegenen Hauptrille (24).

6. Luftreifen nach einem der Ansprüche 1 bis 5, bei dem auf mindestens 10 %, bevorzugt mindestens 20 % und höchstens 85 % der radial äußeren Fläche (SRE) der radial äußersten Scheitellage (5) der radiale Abstand (du) zwischen der radial äußeren Fläche (SRE) der radial äußersten Scheitellage (5) und der Lauffläche (21) um höchstens 5 mm, bevorzugt höchstens 3 mm kleiner ist als der radiale Abstand (dc) zwischen der radial äußeren Fläche (SRE) der radial äußersten Scheitellage (5) und der Lauffläche (21), Abstand lotrecht zum Mittelpunkt der Bodenfläche (243) der nächstgelegenen Hauptrille (24).

7. Luftreifen nach einem der Ansprüche 1 bis 6, bei dem der radiale Abstand (d1) zwischen der radial äußeren Fläche (SRE) der radial äußersten Scheitellage (5) und der Bodenfläche (243) der Hauptrillen (24) mindestens 1 mm und höchstens 5 mm beträgt, bevorzugt mindestens 2 mm und höchstens 4 mm beträgt.

8. Luftreifen nach einem der Ansprüche 1 bis 7, in dem mindestens eine Hauptrille (24) des Laufstreifens (2) mindestens eine Verschleißanzeige (7) umfasst, bei dem der minimale radiale Abstand (du) zwischen der radial äußeren Fläche (SRE) der radial äußersten Scheitellage (5) der Scheitelbewehrung (3) und der Lauffläche (21) mindestens gleich dem radialen Abstand (df) zwischen der Lauffläche (21) und dem radial äußersten Punkt (71) der Verschleißanzeige (7) ist.

9. Luftreifen nach einem der Ansprüche 1 bis 8, bei dem alle Teile des Laufstreifens und der Lauffläche über den Wölbungen der radial äußersten Scheitellage (5) mindestens 50 %, bevorzugt 75 %, bevorzugt 100 % der Kautschukzusammensetzung M umfassen.

10. Luftreifen nach einem der Ansprüche 1 bis 9 und umfassend mindestens eine Verschleißanzeige, bei dem der Teil des Laufstreifens radial außerhalb der Verschleißanzeigen zu 100 % aus der Kautschukzusammensetzung M zusammengesetzt ist.

11. Luftreifen nach einem der Ansprüche 1 bis 10, bei dem die Tiefe D einer Hauptrille (24) höchstens 10 mm beträgt.

12. Luftreifen nach einem der Ansprüche 1 bis 11, bei dem nach der Hohlraumanteil im Laufstreifen mindestens 10 % beträgt.

13. Luftreifen nach einem der Ansprüche 1 bis 12, bei dem die radial äußerste Scheitellage (5) aus Verstärkungselementen der Scheitelbewehrung (3) Verstärkungselemente aus Textil umfasst, bevorzugt vom Typ aliphatisches Polyamid, aromatisches Polyamid, Kombination von aliphatischem Polyamid und aromatischem Polyamid, Polyethylenterephthalat oder Rayon, die parallel zueinander sind und mit der Umfangsrichtung (XX') des Luftreifens einen Winkel B von höchstens 10° an absolutem Wert bilden.

14. Luftreifen nach einem der Ansprüche 1 bis 13, bei dem mindestens eine Füllkautschukzusammensetzung (6), die eine radiale Dicke von mindestens 0,3 mm aufweist, lotrecht zur Wölbung (512) der radial äußersten Scheitellage (5) angeordnet ist.

15. Luftreifen nach Anspruch 14, bei dem die Füllkautschukzusammensetzung (6) einen maximalen dynamischen Verlust tanδ1, gemessen bei einer Temperatur von 23 °C bei 10 Hz, aufweist, der höchstens gleich dem und bevorzugt um 30 % kleiner als der maximale dynamische Verlust tanδ2 ist der am wenigsten hysteresischen Kautschukzusammensetzung des Laufstreifens (2) und radial außerhalb der Bodenflächen der Hauptrillen, gemessen bei einer Temperatur von 23 °C und unter einer Beanspruchung von 0,7 MPa bei 10 Hz.

## Claims

1. Tyre (1) for a passenger vehicle, comprising:
• a tread (2) intended to come into contact with the ground via a tread surface (21) comprising grooves (24), a groove (24) forming a space that opens onto the tread surface (21) and is delimited by two main lateral faces (241, 242) connected by a bottom face (243), having a width W defined by the mean distance between the two lateral faces (241, 242) and a depth D defined by the maximum radial distance between the tread surface (21) and the bottom face (243),
• at least one groove (24), which is a major groove, having a width W at least equal to 1 mm and a depth D at least equal to 4 mm,
• the tyre (1) also comprising a crown reinforcement (3), radially on the inside of the tread (2), comprising at least one layer of reinforcing elements (41, 42, 5), denoted crown layer,
• the at least one layer of reinforcing elements (41, 42, 5) extending radially from a radially inner surface (RIS) to a radially outer surface (ROS),
the radially outermost crown layer (5) comprises at least one undulation (512),
the at least one undulation (512) in the radially outermost crown layer is such that the radially outermost crown layer portion (5) of the undulation (512) is radially on the outside of the points of said radially outermost crown layer that are radially beneath the centre of the bottom face (243) of the major groove (24) closest to said undulation (512),
the at least one undulation (512) in the radially outermost crown layer (5) is such that, over at least 10% of the radially outer surface (ROS) of said crown layer (5), the radial distance (du) between the radially outer surface (ROS) of the radially outermost crown layer (5) and the tread surface (21) is at least 1.5 mm less than the radial distance (dc) between the radially outer surface (ROS) of the radially outermost crown layer (5) and the tread surface (21), which is the distance radilly beneath the centre of the bottom face (243) of the major groove (24) closest to said undulation (512),
**in that** the minimum radial distance (du) between the radially outer surface (ROS) of the radially outermost crown layer (5) of the crown reinforcement (3) and the tread surface (21) is at most equal to the depth D of the closest major groove (24) plus 2 mm and at least equal to the depth D of the closest major groove (24) minus 2 mm,
**characterized in that** the part of the tread radially above at least one undulation in the radially outermost crown layer comprises at least 30% of a rubber compound M, the dynamic shear modulus G* of which, measured at 40°C at 10% peak-to-peak strain at 10 Hz according to standard ASTM D 5992-96, is at most equal to 3.25 M Pa.

2. Tyre according to Claim 1, **wherein** the rubber compound M has a dynamic shear modulus G*, measured at 40°C at 10% peak-to-peak strain at 10 Hz, that is at most equal to 3 MPa, preferably at most equal to 2.5 MPa.

3. Tyre according to one or the other of Claims 1 and 2, **wherein** the rubber compound M has a dynamic shear modulus G*, measured at 90°C at 10 Hz and under a stress of 0.7 MPa, that is at most equal to 1 MPa, preferably at most equal to 0.75 MPa, preferably at most equal to 0.5 MPa.

4. Tyre according to any one of Claims 1 to 3, **wherein** the rubber compound M has a tan δ0 value at least equal to 0.5, preferably at least equal to 0.6, where tan δ0 denotes the tan δ value measured at a temperature of 0°C at 10 Hz and under a stress of 0.7 MPa.

5. Tyre according to any one of Claims 1 to 4, **wherein,** over at least 10%, preferably at least 20% and at most 85%, of the radially outer surface (ROS) of the radially outermost crown layer (5), the radial distance (du) between the radially outer surface (ROS) of the radially outermost crown layer (5) and the tread surface (21) is at least 1.5 mm, preferably 2 mm, less than the radial distance (dc) between the radially outer surface (ROS) of the radially outermost crown layer (5) and the tread surface (21), which is the distance radially beneath the centre of the bottom face (243) of the closest major groove (24).

6. Tyre according to any one of Claims 1 to 5, **wherein,** over at least 10%, preferably at least 20% and at most 85%, of the radially outer surface (ROS) of the radially outermost crown layer (5), the radial distance (du) between the radially outer surface (ROS) of the radially outermost crown layer (5) and the tread surface (21) is at most 5 mm, preferably at most 3 mm, less than the radial distance (dc) between the radially outer surface (ROS) of the radially outermost crown layer (5) and the tread surface (21), which is the distance radially beneath the centre of the bottom face (243) of the closest major groove (24).

7. Tyre according to any one of Claims 1 to 6, wherein the radial distance (d1) between the radially outer surface (ROS) of the radially outermost crown layer (5) and the bottom face (243) of the major grooves (24) is at least equal to 1 mm and at most equal to 5 mm, preferably at least equal to 2 mm and at most equal to 4 mm.

8. Tyre according to any one of Claims 1 to 7, where at least one major groove (24) of the tread (2) comprises at least one wear indicator (7), **wherein** the minimum radial distance (du) between the radially outer surface (ROS) of the radially outermost crown layer (5) of the crown reinforcement (3) and the tread surface (21) is at least equal to the radial distance (df) between the tread surface (21) and the radially outermost point (71) of the wear indicator (7).

9. Tyre according to any one of Claims 1 to 8, **wherein** all parts of the tread and of the tread surface radially above the undulations in the radially outermost crown layer (5) comprise at least 50% of the rubber compound M, preferably 75%, preferably 100%.

10. Tyre according to any one of Claims 1 to 9 and comprising at least one wear indicator, **wherein** the part of the tread radially on the outside of the wear indicators is made up 100% of the rubber compound M.

11. Tyre according to any one of Claims 1 to 10, **wherein** the depth D of a major groove (24) is at most equal to 10 mm.

12. Tyre according to any one of Claims 1 to 11, **wherein** the void ratio of the tread is at least equal to 10%.

13. Tyre according to any one of Claims 1 to 12, **wherein** the radially outermost crown layer (5) of reinforcing elements of the crown reinforcement (3) comprises reinforcing elements made of textile, preferably of the aliphatic polyamide or aromatic polyamide type, of a type involving a combination of aliphatic polyamide and aromatic polyamide, of polyethylene terephthalate type or of rayon type, which are mutually parallel and form an angle B at most equal to 10°, in terms of absolute value, with the circumferential direction (XX') of the tyre.

14. Tyre according to any one of Claims 1 to 13, **wherein** at least one padding rubber compound (6) having a radial thickness at least equal to 0.3 mm is positioned radially beneath the undulation (512) in the radially outermost crown layer (5).

15. Tyre according to Claim 14, **wherein** the padding rubber compound (6) has a maximum dynamic loss tanδ1, measured at a temperature of 23°C at 10 Hz, at most equal to and preferably 30% less than the maximum dynamic loss tanδ2 of the least hysteretic rubber compound of the tread (2) and radially on the outside of the bottom surfaces of the major grooves, measured at a temperature of 23°C and under a stress of 0.7 MPa at 10 Hz.
